# NEUE EUROPÄISCHE PATENTSCHRIFT

(11) **EP 2 256 364 B2**
(45) Veröffentlichungstag und Bekanntmachung des Hinweises auf die Entscheidung über den Einspruch: **25.04.2018**
(45) Hinweis auf die Patenterteilung: 21.05.2014
(21) Anmeldenummer: 10163867.4
(22) Anmeldetag: 26.05.2010
(51) Int. Cl.: F16F 9/56

(54) **Zylinderanordnung**
Cylinder system
Dispositif de cylindre

(30) Priorität: 27.05.2009 DE 202009007570 U
(43) Veröffentlichungstag der Anmeldung: 01.12.2010
(73) Patentinhaber: AL-KO Record, S.A., 48220 Abadiano (ES)
(72) Erfinder: Friess Gerhard, 48220 Amorebieta (ES)
(74) Vertreter: Ernicke, Klaus Stefan

(56) Entgegenhaltungen:
- EP-A2- 2 020 529
- DD-A1- 238 648
- DE-A1-102005 059 138
- GB-A- 1 529 171
- JP-A- 2001 343 044
- JP-A- 2004 124 994
- US-A1- 2009 020 005

## Beschreibung

Die Erfindung betrifft eine Zylinderanordnung, insbesondere einen Stoßdämpfer, und ein Verfahren zur Bearbeitung einer Zylinderanordnung mit den Merkmalen im Oberbegriff des Verfahrens- und Vorrichtungshauptanspruchs.

Teleskop-Stoßdämpfer werden i.d.R. oberflächenbehandelt, insbesondere lackiert, um den Umgebungsbedingungen im Betrieb Stand zu halten. Hierbei wird angestrebt, alle Oberflächen des Stoßdämpfers mit Ausnahme des Arbeitsbereichs der Kolbenstange zu lackieren. Für die Lackierung ergeben sich Probleme, wenn der Zylinder mit einem Schutzrohr aus Kunststoff umgeben sein soll, da auf solchen Schutzrohren der Lack schlecht haftet und sich wieder löst. Dies bedingt eine Montage von Kunststoffschutzrohren erst nach dem Lackieren. In der Praxis werden Stoßdämpfer an einer Transportkette angehängt und nach dem Lackauftrag durch einen Trockenofen der Lackieranlage transportiert. Durch die hier auftretenden Temperaturen dehnen sich die Zylindermedien aus und führen zu einem Ausfahren der Kolbenstange. Hierbei tritt der normalerweise unbeschichtete Arbeitsbereich der Kolbenstangenoberfläche nach außen und wird durch Abdeckung mit Schlauchstücken, Abklebungen oder auf andere Weise geschützt. Dies erfordert einen erheblichen manuellen Aufwand.

Aus der US 2009/0020005 A1 ist eine Zylinderanordnung mit einer Endlagenarretierung der Kolbenstange im ein- und ausgefahrenen Zustand bekannt. Die Endlagenarretierung ist temporär wirksam und wird durch eine federelastische Schnappverbindung gebildet. Sie kann im Betrieb immer wieder verwendet werden.

Die EP 2 020 529 A2 befasst sich mit einer Zylinderanordnung, bei der zu Transport- und Lagerzwecken der Zylinder in der Einfahrstellung temporär arretiert werden kann und der Verriegelungszustand von außen sichtbar gemacht wird. Die Verriegelung ist wiederverwendbar.

Die DD 238 648 A1 zeigt ebenfalls eine Zylinderanordnung mit einer immer wieder benutzbaren Endlagenverriegelung der eingefahrenen Kolbenstange, die durch eine federelastische Schnappverbindung gebildet wird.

Es ist Aufgabe der vorliegenden Erfindung, eine verbesserte Zylinderanordnung und ein verbessertes Bearbeitungsverfahren für eine Zylinderanordnung aufzuzeigen.

Die Erfindung löst diese Aufgabe mit den Merkmalen im Verfahrens- und Vorrichtungshauptanspruch.

Die beanspruchte Zylinderanordnung ermöglicht einen besseren Umgang mit den vorerwähnten Problemen im Trockenofen und vereinfacht sowie verbilligt den Fertigungs- oder Bearbeitungsprozess für eine Zylinderanordnung, insbesondere einen teleskopierbaren Stoßdämpfer. Der bisher erforderliche manuelle Aufwand für den Schutz des Arbeitsbereich der Kolbenstangenoberfläche kann eingespart werden.

Die Kolbenstange kann mittels der temporär wirksamen Verbindung in eine zum Lackieren oder zur anderweitigen Oberflächenbehandlung günstige Eintauchstellung gebracht und in dieser Stellung fixiert werden. Die dabei geschlossene, temporär wirksame Verbindung verhindert während des Lackierprozesses und der nachfolgenden Trocknung ein unerwünschtes selbstständiges Ausfahren der Kolbenstange. Der Arbeitsbereich der Kolbenstangenoberfläche bleibt somit in der Eintauchstellung optimal geschützt. Anschließend kann die temporäre Verbindung gelöst und die Kolbenstange mit äußerer Krafteinwirkung ausgezogen werden. Im nachfolgenden Zylinderbetrieb ist die Verbindung nach diesem erstmaligen Lösen irreversibel deaktiviert oder geschwächt. Sie kann auch bei oder nach dem erstmaligen Lösen zerstört werden. Sie behindert jedenfalls nicht den weiteren Zylinderbetrieb und stört nicht die Ein- und Ausfahrbewegungen der Kolbenstange. Die Fixierwirkung der Verbindung ist dann dauerhaft aufgehoben.

Für die Ausbildung der temporär und bevorzugt nur einmalig fixierend wirksamen Verbindung gibt es verschiedene Gestaltungsmöglichkeiten. Erfindungsgemäß ist eine Klemmverbindung, die sich besonders gut für eine einmalige Fixierfunktion und anschließende bleibende Deaktivierung eignet. Zum einen kann hierfür eine Presspassung zum Einsatz kommen, die bei oder nach dem erstmaligen Lösen zerstört wird und danach nicht mehr störend wirksam ist. Rändelungen, Körnungen etc. können den gleichen Zweck erfüllen.

Die temporär wirksame Verbindung ist im Inneren des Zylinders angeordnet und befindet sich vorzugsweise im Bodenbereich, insbesondere zwischen einer bodenseitigen Ventilschraube und dem unteren Kolbenstangenende. Die Kolbenstange kann eine Vertiefung, insbesondere eine Sacklochbohrung, als Verbindungselement aufweisen, die bei eingefahrener Kolbenstange auf einen Zapfen am oberen Ventilschraubenende gestülpt und mittels einer zerstörbaren Presspassung temporär fixiert werden kann. Im normalen Zylinderbetrieb kann der Zapfenbereich eine Führungsfunktion für die Kolbenstange behalten.

Die Ventilschraube kann für ein Bodenventil ohnehin vorhanden sein und außerdem die Funktion einer Deflektorscheibe übernehmen. Diese Funktionsverbindung spart Bauteile, Aufwand und Kosten.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: einen Zylinder in Seitenansicht mit einer ausschnittsweise dargestellten temporären Verbindung der Kolbenstange,

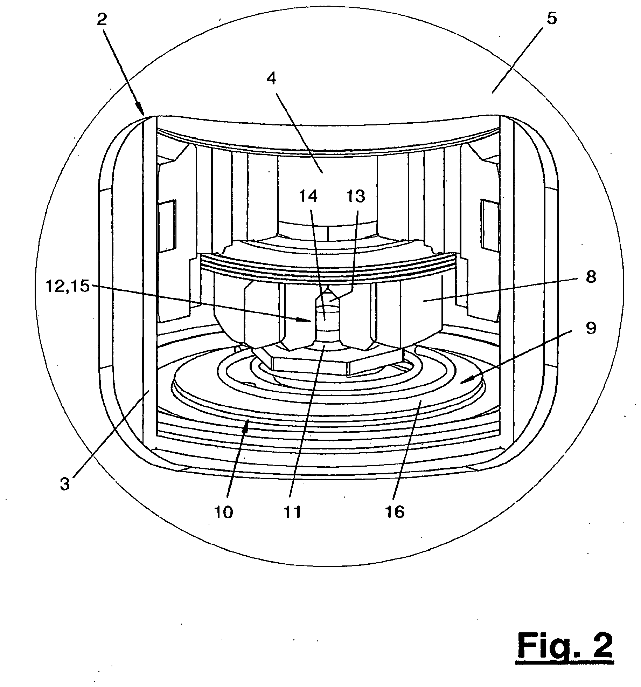

- Figur 2:: eine vergrößerte Darstellung dieses Ausschnittsbereichs von Figur 1 und

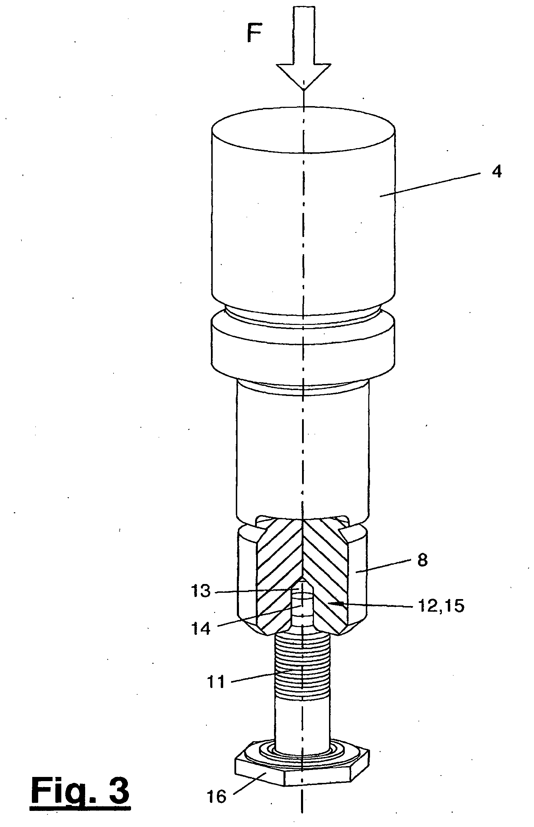

- Figur 3:: eine Schema-Darstellung der Verbindungsteile.

Die Erfindung betrifft eine Zylinderanordnung (1), insbesondere eine dämpfende Zylinderanordnung, mit einer temporären Verbindung oder Fixierung (12) einer Kolbenstange (4) und ein Verfahren zur Zylinderbetätigung beim Herstellungs- oder Bearbeitungsprozess.

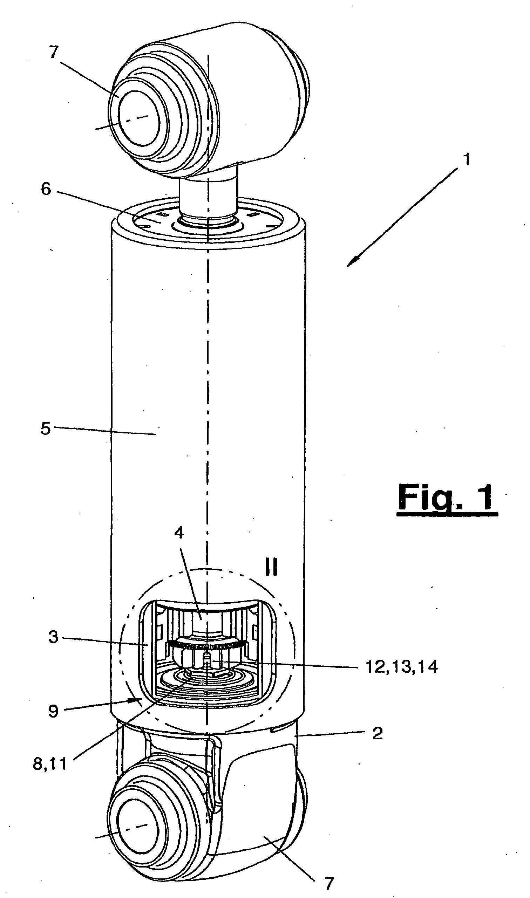

Figur 1 zeigt schematisch eine Zylinderanordnung (1), die hier z.B. als teleskopierbarer Stoßdämpfer ausgebildet ist, der einen Zylinder (2) mit einer Kolbenstange (4) und einem Kolben (nicht dargestellt) aufweist, die in einem aus ein oder mehreren Rohren bestehenden Zylindergehäuse (3) beweglich gelagert sind. Der Zylinder (2) kann an der Unterseite ein Bodenventil (10) aufweisen. An den freien Enden von Zylinder (2) und Kolbenstange (4) können Anbindungselemente (7), z.B. Lageraugen, angebracht sein. Der Dämpfzylinder (2) ist bis auf den Kolbenstangenauslass geschlossen und hat keine Anschlüsse für eine Medienzufuhr von außen.

Die dämpfende Zylinderanordnung (1) besitzt eine Drosselanordnung für das vom Kolben im Zylinderinnenraum verdrängte bzw. umgepumpte fluidische Medium. Sie kann als hydraulischer Dämpfer oder als Gasdruckdämpfer mit einer Federwirkung des Gaspolsters ausgebildet sein. Der Zylinder (2) kann auch ein anderes internes Federelement aufweisen, das z.B. gegen eine Einfahrbewegung der Kolbenstange (4) wirkt und eine Rückstellkraft entfaltet.

Der Zylinder (2) kann außenseitig von einem Schutzrohr (5) umgeben sein, welches mittels eines am oberen Randbereich eingepressten Schutzdeckels (6) mit der Kolbenstange (4) verbunden ist. Der ggf. geteilte Schutzdeckel (6) kann nachträglich an der Kolbenstange (4) montiert werden. Dies kann z.B. durch eine Klemmverbindung mittels einer umlaufenden Ringnut am Kolbenstangenmantel und einer radial vorspringenden, ringförmigen Nase an der Durchgangsöffnung des Schutzdeckels (6) geschehen. Das Schutzrohr (5) und der Schutzdeckels (6) können aus Kunststoff oder einem anderen geeigneten Material bestehen.

Im Innenraum und im Bodenbereich (9) des Zylinders (2) ist eine temporär und vorzugsweise einmalig wirksame Verbindung (12) zwischen der Kolbenstange (4) und dem Zylinder (2) vorgesehen, die ein Einfahren der Kolbenstange (4) und deren Fixierung in der Einfahrstellung erlaubt. Die Verbindung (12) kann kraftschlüssig sein und z.B. als Klemmverbindung ausgeführt sein. Zusätzlich ist eine formschlüssige Verbindung möglich.

In dieser eingefahrenen Stellung kann während des Fertigungs- oder Bearbeitungsprozesses z.B. der außerhalb des Zylindergehäuses (3) und ggf. oberhalb der Ringnut befindliche Kolbenstangenbereich und das Lagerauge (7) lackiert oder in anderer Weise oberflächenbehandelt oder anderweitig bearbeitet werden. Der im Inneren des Zylindermantels (3) befindliche und als Arbeitsbereich bezeichnete Mantelbereich der Kolbenstange ist geschützt. Dieser Arbeitsbereich wird nicht lackiert und kann an die Betriebserfordernisse des Zylinders (2) angepasst sein. Er kann z.B. geglättet oder verchromt sein. Durch diese Oberflächenbeschaffenheit werden Verschmutzungen oder Beschädigungen der Zylinderdichtung an der Durchtrittsstelle der Kolbenstange vermieden.

Die temporäre wirksame Verbindung (12) besteht aus z.B. zwei oder mehr zusammen wirkenden Verbindungselementen (13,14). Sie entfaltet eine begrenzte Fixierungs- oder Haltefunktion, die vorzugsweise nur während des Herstellungs- oder Bearbeitungsprozesses vorhanden ist. Sie kann insbesondere nur einmal wirksam sein. Die temporäre Verbindung (12) wird bei oder nach dem erstmaligen Lösen der Verbindung deaktiviert oder geschwächt. Ein Deaktivieren ist z.B. durch Zerstören möglich. Eine Schwächung kann z.B. durch Abnutzung, Abrieb, erfolgen. Im anschließenden normalen Zylinderbetrieb wird die Fixierungs- oder Haltefunktion aufgehoben, wodurch die Kolbenstange (4) ungehindert einfahren und ausfahren kann. Allenfalls kann bei z.B. einer Klemmverbindung und bei den ersten Ausfahrbewegungen eine minimale Rückhaltewirkung bestehen, die durch Abrieb jedoch schnell aufgehoben wird. Die tatsächliche Fixierungswirkung der Verbindung (12) für die Kolbenstange (4) besteht jedoch bevorzugt nur einmal.

In der gezeigten Ausführungsform hat der Zylinder (2) an der Unterseite ein Bodenventil (10). Dieses ist mit einer Ventilschraube (11) versehen, die axial nach oben in den Zylinderinnenraum ragt und am oberen Ende des Schraubschafts einen zapfenförmigen Fortsatz mit glatter Wandung trägt, der ein Verbindungselement (14) der temporären Verbindung (12) darstellt. Die Ventilschraube (11) kann außerdem an der Unterseite eine quer liegende Platte (16) aufweisen, die z.B. die Deflektorplatte des Bodenventils (10) darstellt.

Ein anderes Verbindungselement (13) kann am unteren Endbereich (8) der Kolbenstange (4) angeordnet sein. Dieser Stangenbereich (8) kann z.B. als Kolbenzapfen ausgebildet und unterhalb des Kolbens angeordnet sein. Das Verbindungselement (13) ist in der gezeigten Ausführungsform als axiale Vertiefung und z.B. als Sacklochbohrung, als Sechskantöffnung oder dgl. an der Stangenunterseite ausgebildet. In der voll eingefahrenen Stellung der Kolbenstange (4) wird die Vertiefung (13) über den Zapfen (14) gestülpt. Zur Schaffung der Verbindung (12) kann eine Presspassung (15) zwischen diesen Verbindungselementen (13, 14) bestehen. Die Presspassung (15) ist derart ausgebildet, dass sie nach dem Lösen der Verbindung (12) durch Abrieb oder dgl. geschwächt oder zerstört wird, wodurch ein ausreichendes radiales Spiel zwischen den Verbindungselementen (13,14) entsteht, das im weiteren Zylinderbetrieb die Kolbenstangenbewegung nicht behindert.

Die Kolbenstange (4) kann in einer Mehrspindeldrehmaschine gefertigt werden, wobei die Vertiefung (13) oder Zentrierbohrung ohne Mehraufwand zeitgleich eingebracht werden kann. Die Vertiefung (13) kann einen umlaufend geschlossenen Mantel aufweisen. Der Mantel kann alternativ Unterbrechungen aufweisen.

Im Fertigungsprozess wird nach dem Zusammenbau von Kolbenstange (4) mit Kolben und Zylinder (2) die Kolbenstange (4) eingefahren, wobei am Bewegungsende die Verbindung (12) erstmalig geschlossen wird. Die Verbindung (12) bzw. die Presspassung (15) fixiert die Kolbenstange (4) in der Eintauchstellung, sodass diese nicht von allein wieder ausfahren kann. Die Verbindung (12) bzw. die Presspassung (15) wirkt auch gegen evtl. innere Rückstellkräfte, wie Federkräfte oder Medienexpansionskräfte. Der aus dem Zylindermantel (3) herausragende Kolbenstangenbereich und das anschließende Lagerauge (7) können danach lackiert oder in anderer Weise oberflächenbehandelt bzw. bearbeitet werden. Anschließend können sie einer Wärmebehandlung unterzogen werden, wobei die Kolbenstange (4) durch die geschlossene Verbindung (12) in der Eintauchstellung fixiert wird und der Arbeitsbereich des Kolbenstangenmantels geschützt im Zylinderinnenraum verbleibt.

Nach Beendigung des Lackierprozesses kann die Kolbenstange (4) von Hand oder mit einer Vorrichtung ausgezogen werden. Hierbei kann sie ggf. auch um ihre Längsachse gedreht werden. Beim Ausziehen wird durch die äußere Krafteinwirkung die Verbindung (12), insbesondere die Presspassung (15), gelöst und derart beschädigt oder zerstört, dass sie im weiteren Zylinderbetrieb keine störende Klemm-wirkung auf die Kolbenstange (4) ausübt. Die Zentrierfunktion beim Ineinandergreifen der Verbindungselemente (13,14) kann für die Kolbenstange (4) allerdings erhalten bleiben.

Abwandlungen der gezeigten und beschriebenen Ausführungsform sind in verschiedener Weise möglich. Die temporäre Verbindung (12) und die Klemmverbindung kann in anderer Weise ausgebildet sein und z.B. durch eine Rändelung, durch Körnungen oder durch voneinander abweichende Querschnittsformen der Verbindungselemente (13,14), z.B. einer Kombination von kreisförmigen und elliptischen Querschnitten, bewirkt werden. Ferner ist eine Teileumkehr möglich, wobei z.B. ein Fortsatz oder Zapfen (14) an der Kolbenstange (4) und eine Vertiefung (13) im Zylinder (2) angeordnet ist. Die temporäre Verbindung (12) kann auch an anderer Stelle Im Zylindergehäuse (3) als am Bodenbereich (9) angeordnet sein. Desgleichen kann die Zylinderanordnung (1) in anderer Weise ausgebildet sein und anderen Zwecken dienen.

### BEZUGSZEICHENLISTE

- 1: Zylinderanordnung, Stoßdämpfer
- 2: Zylinder
- 3: Zylindermantel
- 4: Kolbenstange
- 5: Schutzrohr
- 6: Schutzdeckel
- 7: Lagerauge
- 8: unterer Endbereich, Kolbenzapfen
- 9: Bodenbereich
- 10: Bodenventil
- 11: Ventilschraube
- 12: temporäre Verbindung
- 13: Verbindungselement, Vertiefung, Bohrung
- 14: Verbindungselement, Zapfen
- 15: Presspassung
- 16: Platte, Deflektorplatte

## Patentansprüche

1. Zylinderanordnung, insbesondere Stoßdämpfer, mit einem Zylinder (2) und einer Kolbenstange (4), wobei der Zylinder (2) eine temporär wirksame Verbindung (12) zwischen der Kolbenstange (4) und dem Zylinder (2) aufweist, **dadurch gekennzeichnet, dass** die Verbindung (12) als kraftschlüssige Klemmverbindung ausgebildet ist und beim ersten Einfahren der Kolbenstange (4) schließbar und bei oder nach dem erstmaligen Lösen dauerhaft deaktiviert oder geschwächt ist.

2. Zylinderanordnung nach Anspruch 1, **dadurch gekennzeichnet, dass** die Verbindung (12) im Bodenbereich (9) des Zylinders (2) angeordnet ist.

3. Zylinderanordnung nach Anspruch 1 oder 2, **dadurch gekennzeichnet, dass** die Verbindung (12) eine einmalige tatsächliche Fixierungswirkung für die Kolbenstange (4) hat.

4. Zylinderanordnung nach Anspruch 1, 2 oder 3, **dadurch gekennzeichnet, dass** die Verbindung (12) nach dem erstmaligen Lösen zerstörbar ist.

5. Zylinderanordnung nach einem der vorhergehenden Ansprüche, **dadurch gekennzeichnet, dass** die Verbindung (12) eine Presspassung (15) aufweist.

6. Zylinderanordnung nach einem der vorhergehenden Ansprüche, **dadurch gekennzeichnet, dass** die Verbindung (12) zwei zusammen wirkende und insbesondere ineinander greifende Verbindungselemente (13,14) aufweist.

7. Zylinderanordnung nach einem der vorhergehenden Ansprüche, **dadurch gekennzeichnet, dass** der Zylinder (2) ein Bodenventil (10) mit einer Ventilschraube (11) aufweist.

8. Zylinderanordnung nach Anspruch 7, **dadurch gekennzeichnet, dass** die Verbindung (12) zwischen der Kolbenstange (4) und der Ventilschraube (11) besteht.

9. Zylinderanordnung nach Anspruch 6, 7 und 8, **dadurch gekennzeichnet, dass** die Kolbenstange (4) am unteren Endbereich (8) ein als axiale Vertiefung ausgebildetes Verbindungselement (13) aufweist.

10. Zylinderanordnung nach Anspruch 7, 8 oder 9, **dadurch gekennzeichnet, dass** die Ventilschraube (11) ein axiales zapfenförmiges Verbindungselement (14) aufweist.

11. Zylinderanordnung nach Anspruch 5, 6 und 10, **dadurch gekennzeichnet, dass** die Presspassung (15) zwischen dem Zapfen (14) und der Vertiefung (13) besteht.

12. Zylinderanordnung nach einem der vorhergehenden Ansprüche, **dadurch gekennzeichnet, dass** die Zylinderanordnung (1) ein den Zylinder (2) und die Kolbenstange (4) umgebendes und mit der Kolbenstange (4) verbundenes Schutzrohr (5) aufweist, das mit einem Schutzdeckel (6) an der Kolbenstange (4) befestigt und nachträglich montierbar ist.

13. Verfahren zur Bearbeitung einer Zylinderanordnung (1), insbesondere eines Stoßdämpfer, der einen Zylinder (2) und eine Kolbenstange (4) aufweist, **dadurch gekennzeichnet, dass** die Kolbenstange (4) in den Zylinder (2) eingefahren und mit einer internen temporär wirksamen und wieder lösbaren Verbindung (12) zwischen der Kolbenstange (4) und dem Zylinder (2) in der Einfahrstellung fixiert wird, wobei die Verbindung (12) als kraftschlüssige Klemmverbindung ausgebildet ist und die Zylinderanordnung (1) in der Einfahrstellung bearbeitet, insbesondere lackiert wird und die Verbindung (12) bei oder nach dem anschließenden Lösen deaktiviert oder geschwächt wird.

## Claims

1. Cylinder arrangement, in particular shock absorber, having a cylinder (2) and a piston rod (4), the cylinder (2) having a temporarily active connection (12) between the piston rod (4) and the cylinder (2), **characterized in that** the connection (12) is configured as a force-fitting clamping connection can be closed upon the first retraction of the piston rod (4) and is deactivated or weakened permanently upon or after the one-time release.

2. Cylinder arrangement according to Claim 1, **characterized in that** the connection (12) is arranged in the bottom region (9) of the cylinder (2).

3. Cylinder arrangement according to Claim 1 or 2, **characterized in that** the connection (12) has a one-time actual fixing action for the piston rod (4).

4. Cylinder arrangement according to Claim 1, 2 or 3, **characterized in that** the connection (12) can be destroyed after the one-time release.

5. Cylinder arrangement according to one of the preceding claims, **characterized in that** the connection (12) has a press fit (15).

6. Cylinder arrangement according to one of the preceding claims, **characterized in that** the connection (12) has two connecting elements (13, 14) which interact and, in particular, engage into one another.

7. Cylinder arrangement according to one of the preceding claims, **characterized in that** the cylinder (2) has a bottom valve (10) with a valve screw (11).

8. Cylinder arrangement according to Claim 7, **characterized in that** the connection (12) exists between the piston rod (4) and the valve screw (11).

9. Cylinder arrangement according to Claim 6, 7 and 8, **characterized in that**, at the lower end region (8), the piston rod (4) has a connecting element (13) which is configured as an axial depression.

10. Cylinder arrangement according to Claim 7, 8 or 9, **characterized in that** the valve screw (11) has an axial pin-shaped connecting element (14).

11. Cylinder arrangement according to Claim 5, 6 and 10, **characterized in that** the press fit (15) exists between the pin (14) and the depression (13).

12. Cylinder arrangement according to one of the preceding claims, **characterized in that** the cylinder arrangement (1) has a protective tube (5) which surrounds the cylinder (2) and the piston rod (4), is connected to the piston rod (4), is fastened with a protective cover (6) to the piston rod (4) and can be mounted retrospectively.

13. Method for finishing a cylinder arrangement (1), in particular a shock absorber which has a cylinder (2) and a piston rod (4), **characterized in that** the piston rod (4) is retracted into the cylinder (2) and is fixed in the retracted position by way of an internal connection (12) between the piston rod (4) and the cylinder (2) which is active temporarily and can be released again, whereas the connection (12) is configured as a force-fitting clamping connection, the cylinder arrangement (1) being finished, in particular painted, in the retracted position and the connection (12) being deactivated or weakened upon or after the subsequent release.

## Revendications

1. Système de cylindre, en particulier amortisseur, comprenant un cylindre (2) et une tige de piston (4), le cylindre (2) présentant une connexion temporairement active (12) entre la tige de piston (4) et le cylindre (2), **caractérisé en ce que** la connexion (12) est réalisée sous forme de connexion par serrage, qui est une liaison par friction, et peut être fermée lors du premier enfoncement de la tige de piston (4) et est désactivée ou affaiblie de manière durable lors du premier ou après le premier desserrage.

2. Système de cylindre selon la revendication 1, **caractérisé en ce que** la connexion (12) est disposée dans la région du fond (9) du cylindre (2) .

3. Système de cylindre selon la revendication 1 ou 2, **caractérisé en ce que** la connexion (12) présente un effet de fixation effectif une seule fois pour la tige de piston (4).

4. Système de cylindre selon la revendication 1, 2 ou 3, **caractérisé en ce que** la connexion (12) peut être détruite après le premier desserrage.

5. Système de cylindre selon l'une quelconque des revendications précédentes, **caractérisé en ce que** la connexion (12) présente un ajustement serré (15) .

6. Système de cylindre selon l'une quelconque des revendications précédentes, **caractérisé en ce que** la connexion (12) présente deux éléments de connexion (13, 14) coopérant l'un avec l'autre et notamment s'engageant l'un dans l'autre.

7. Système de cylindre selon l'une quelconque des revendications précédentes, **caractérisé en ce que** le cylindre (2) présente une soupape de fond (10) avec une vis de soupape (11).

8. Système de cylindre selon la revendication 7, **caractérisé en ce que** la connexion (12) est établie entre la tige de piston (4) et la vis de soupape (11).

9. Système de cylindre selon la revendication 6, 7 et 8, **caractérisé en ce que** la tige de piston (4) présente au niveau de la région d'extrémité inférieure (8) un élément de connexion (13) réalisé sous forme de renfoncement axial.

10. Système de cylindre selon la revendication 7, 8 ou 9, **caractérisé en ce que** la vis de soupape (11) présente un élément de connexion (14) axial en forme de tourillon.

11. Système de cylindre selon la revendication 5, 6 ou 10, **caractérisé en ce que** l'ajustement serré (15) est réalisé entre le tourillon (14) et le renfoncement (13).

12. Système de cylindre selon l'une quelconque des revendications précédentes, **caractérisé en ce que** le système de cylindre (1) présente un tube de protection (5) entourant le cylindre (2) et la tige de piston (4) et connecté à la tige de piston (4), lequel est fixé par un couvercle de protection (6) à la tige de piston (4) et peut être monté ultérieurement.

13. Procédé pour traiter un système de cylindre (1), en particulier un amortisseur, qui présente un cylindre (2) et une tige de piston (4), **caractérisé en ce que** la tige de piston (4) est enfoncée dans le cylindre (2) et est fixée dans la position d'enfoncement par une connexion interne (12) entre la tige de piston (4) et le cylindre (2), la connexion étant temporairement active et pouvant être à nouveau desserrée, et la connexion (12) étant réalisée sous forme de connexion de serrage, qui est une liaison par friction, le système de cylindre (1) étant traité, notamment revêtu d'une couche de vernis, dans la position d'enfoncement, et la connexion (12) étant désactivée ou affaiblie lors du desserrage suivant ou après le desserrage suivant.
